Europäisches Patentamt

(19) European Patent Office

Office européen des brevets

(11) **EP 0 579 121 B1**

(12) **EUROPEAN PATENT SPECIFICATION**

(45) Date of publication and mention
of the grant of the patent:
**16.12.1998 Bulletin 1998/51**

(21) Application number: **93110969.8**

(22) Date of filing: **08.07.1993**

(51) Int. Cl.$^6$: **B32B 27/20**, B32B 27/36
// G11B5/62, G11B5/71,
G11B5/72

(54) **Polyester film**

Polyesterfilm

Film de polyester

(84) Designated Contracting States:
**DE FR GB IT LU NL**

(30) Priority: **13.07.1992 JP 185323/92**
**29.09.1992 JP 260319/92**
**16.10.1992 JP 278987/92**
**20.10.1992 JP 281968/92**
**15.12.1992 JP 334529/92**
**15.12.1992 JP 334530/92**
**05.01.1993 JP 352/93**
**05.01.1993 JP 353/93**
**25.03.1993 JP 66782/93**
**13.04.1993 JP 86397/93**

(43) Date of publication of application:
**19.01.1994 Bulletin 1994/03**

(73) Proprietor:
**DIAFOIL HOECHST CO., LTD**
**Bunkyo-ku Tokyo (JP)**

(72) Inventors:
• **Otani, Yuzo**
**Tokyo-to (JP)**
• **Sakamoto, Seiji**
**Machida-shi, Tokyo-to (JP)**

(74) Representative:
**TER MEER STEINMEISTER & PARTNER GbR**
**Mauerkircherstrasse 45**
**81679 München (DE)**

(56) References cited:
**EP-A- 401 689**        **EP-A- 0 490 665**
**DE-A- 3 414 310**

• **DATATBASE WPIL, no. 84-014 833, DERWENT**
**PUBLICATIONS LTD., London, GB & JP-A-58 208**
**048 (HITACHI K.K.) 3 December 1983**
• **DATABASE WPIL, no. 92-137 984 DERWENT**
**PUBLICATIONS LTD., London, GB & JP-A-04 080**
**031 (TOYOBO K.K.) 13 March 1992**

**Description**

BACKGROUND OF THE INVENTION

Field of the invention

The present invention relates to a polyester film which can be used for a magnetic recording medium having excellent runnability, electromagnetic conversion property and abrasion resistance. More particularly, it relates to a base film suitable for a high density magnetic recording tape in which the generation of the scratch and abrasion powder is extremely low during the running of the tape and the dropout is prevented.

Description of related art

Polyester films have excellent physical and chemical properties and are widely used as an industrial base material. Among them, a biaxially oriented polyethylene terephthalate film is essential for a base film of the magnetic recording medium, since it has particularly excellent mechanical strength, dimensional stability and flatness. Recently the magnetic recording medium is rapidly improved and, accordingly, the requirements for a base film become stricter. For example, a medium required to have the high density recording such as a videotape has a thin magnetic layer and a surface of the magnetic layer reflects the smoothness of the base film. When the degree of the reflection is large, the electromagnetic conversion property is deteriorated and the dropout frequently occurs. Accordingly, the surface of the base film is required to be flatter. However, when the film surface is flat, then the runnability of the film is deteriorated, and the friction and abrasion between the film and a substrate such as a guide pin increase so that the film is scratched and the abrasion powder generates.

When the polyester film has insufficient abrasion resistance, the abrasion powder generates between the film and the various rolls or guide pins after the preparation of the finished product or during the preparation of the magnetic layer so that the electromagnetic conversion property and the dropout property are deteriorated. When the film has insufficient scratch resistance, the film is easily scratched before and after coating the magnetic layer so that the film has poor electromagnetic properties because of the surface of the magnetic layer. The electromagnetic properties are often deteriorated because of the presence of scraped white powder material.

A method of roughening suitably the film surface by the presence of inert fine particles in the film (so-called a particle deposition method and a particle addition method) is conventionally known as the means for improving the surface properties such as the abrasion resistance and the runnability of the polyester film.

The particle deposition method comprises depositing fine particles of a catalyst residue and like in the polyester during the preparation of the polyester. According to this method, the operation is simple, the polymer can be prepared economically and the filter life during the preparation is long. The particles have excellent affinity for the polyester and seldom drop off from the film, and the film has relatively excellent abrasion resistance. However, the deposited particles mainly contains an organic material so that the film has poor scratch resistance.

The particle addition method comprises adding fine particles such as calcium carbonate, kaolin, silica and titanium oxide during the preparation of the polyester or during the shaping so as to incorporate the particles into the polyester. In this method, the particles generally tend to have poor affinity for the polyester, but the scratch resistance is effectively improved. As described in Japanese Patent Kokai Publication No. 306220/1989, it is known that the scratch resistance and the abrasion resistance are remarkably improved when particles having high hardness are used in a specified amount. However, the use of the high hardness particle alone or in combination with other particles improves the properties necessary for the magnetic tape, but it is disadvantageous in view of the cost and the preparation. Namely, in the method which comprises incorporating the high hardness particles in the polyester film, it is necessary to fill the whole film with the expensive particles prepared by a special preparation method and it is necessary to add a large amount of a dilute ethylene glycol slurry so as to give good dispersion of the particles during the preparation of the polyester film containing the particles. This method is disadvantageous in view of the apparatus, the operation and the preparation cost.

DE-A-34 14 310 discloses a multilayer biaxially oriented substrate film for magnetic recording media comprising a base layer (A) substantially consisting of a linear aromatic polyester and cone 0.001 to 10 % by weight of fine particles having an average size of 0.001-20 $\mu$m, and a coating layer (B) consisting essentially of a linear aromatic copolyester and containing 0-10 % by weight of fine particles having an average diameter of less than 0.3 $\mu$m, wherein the thickness of the coating layer (B) is at most 40 % of the thickness of the base layer (A), and wherein the particles of coating layer (B) may consist of inorganic or organic material such as silica, natural and pyrogenic alumina, $CaCO_3$ or $TiO_2$.

SUMMERY OF THE INVENTION

An object or the present invention is to provide a polyester film which solves the above problems and is used as a base film for a magnetic recording tape.

The present invention provides a polyester film comprising a polyester substrate film and a coating layer containing a polyester resin in an amount of 30 to 98 % by weight on at least one surface of the polyester substrate film prepared during a film formation process of the polyester substrate film, wherein at least 80 % by weight of the repeating units of the polyester of the substrate film are ethylene terephthalate units or ethylene-2,6-naphthalate units, the coating layer having a thickness (T) of 0.01 to 1 $\mu$m and containing from 0.1 to 50 % by weight of aluminum oxide particles (B) having an average particle size (Db) of not larger than 1 $\mu$m selected from the group consisting of $\gamma$-, $\delta$- and $\theta$-aluminum oxides.

DETAILED DESCRIPTION OF THE INVENTION

The polyester may be a polymer prepared from main raw materials which comprises an aromatic dicarboxylic acid or an ester thereof such as terephthalic acid and naphthalene-2,6-dicarboxylic acid, and a glycol, preferably an aliphatic glycol such as ethylene glycol. The polyester may contain a third component. Specific examples of the dicarboxylic acid component are isophthalic acid, terephthalic acid, naphthalene-2,6-dicarboxylic acid, adipic acid and sebacic acid. Specific examples of the glycol component are ethylene glycol, diethylene glycol, propylene glycol, butane diol, 1,4-cyclohexanedimethanol and neopentyl glycol. The polyester according to the present invention is a polyester in which at least 80 % of the repeating units are ethylene terephthalate units or ethylene-2,6-naphthalate units.

The polyester film of the present invention is one prepared from the above polyester which is the raw material. The polyester film can be prepared by the conventionally known methods. For example, a method in which the polyester is extruded at 270-320°C to form a sheet, the sheet is cooled to be solidified at 40-80°C to prepare an amorphous sheet, the sheet is successively or simultaneously stretched biaxially in a machine direction and a transverse direction at an area draw ratio of 4-20 and then the sheet is thermally treated at 160-250°C (for example, Japanese Patent Kokoku Publication No. 5639/1955) can be used. Each of the stretching in the machine direction and the stretching in the transverse direction may be conducted in one stage or in plural stages. A thermal treatment zone can be provided between the plural stages so as to relax the orientation. The sheet may be restretched after the biaxial stretching and before the thermal treatment. The restretching may be conducted in any of machine and transverse directions.

The particles (A) are usually incorporated in the polyester substrate film. The particles (A) have preferably an average particle size of from 0.2 to 2 $\mu$m, and may be caolin, talc, carbon, molybdenum sulfide, plaster, rock salt, calcium carbonate, barium sulfate, lithium fluoride, calcium fluoride, zeolite, calcium phosphate, silicon dioxide, titanium dioxide and thermal resistant polymer fine powder. An amount of the particles (A) is preferably from 0.005 to 0.5 % by weight based on the polyester substrate film weight. A thickness of the polyester substrate film is not limited and is usually from 1 $\mu$m to 10 mm, preferably from 5 to 200 $\mu$m.

In the present invention, the coating layer containing the aluminum oxide particles (B) having a specified particle size is provided on at least one surface of the polyester substrate film. The coating layer not only improves the scratch resistance and the abrasion resistance of the film because of the presence of the particles (B) therein, but also acts as a protective layer which prevents large particles in the polyester film from dropping off from the polyester film. In addition, the coating layer prevents the drop off of the large particles without deteriorating the improvement of the winding property.

The coating layer may be provided before or after the completion of the stretching. For example, the coating layer may be provided after partially stretching the substrate film.

A thickness of the coating layer in the film is from 0.01 to 1 $\mu$m. When the thickness of the coating layer is selected, the properties of the coating layer may depend on the relationship between the thickness of the coating layer and the particles size of the particles added in the film. Accordingly, a relationship between the thickness (T) of the coating layer and an average particle size (Da) of the particles (A) in the film and a relationship between the thickness (T) of the coating layer and an average particle size (Db) of the particles (B) in the film preferably satisfy the following inequality:

$$0.9\,Db \leq T \leq 0.5\,Da$$

The aluminum oxide particles used in the present invention have an average primary particle size of at most 1 $\mu$m, preferably from 0.005 to 0.2 $\mu$m, and can be prepared by a flame hydrolysis of anhydrous aluminum chloride, a hydrolysis of aluminum alkoxide and the like. As well known, aluminum oxide can be prepared by thermally decomposing an aluminum oxide hydrate such as gibbsite, bialite, boehmite and the like. Aluminum oxide can have about ten different crystalline types of $\alpha$, $\beta$, $\gamma$, $\kappa$, o, $\delta$, $\eta$, $\chi$, $\rho$ and the like depending on the kind of the raw material and the hydrolysis conditions, particularly temperature condition. Aluminum chloride can be combustion hydrolyzed in an oxyhydrogen flame to give aluminum oxide, and in this case, aluminum oxide having various crystalline types such as $\alpha$, $\gamma$, $\delta$ and the like

can be prepared depending on the treating conditions.

Each of these aluminum oxides has its own property For example, $\alpha$-aluminum oxide has a small specific surface area and does not have a significant catalytic activity, but $\gamma$- and $\eta$-aluminum oxides usually have a specific surface area of from about 150 to 300 $m^2/g$ and a high catalytic activity. According to the crystalline types, the aluminum oxide has a density of from 2.5 to 4.0 $g/cm^3$ and a delicately varied hardness.

We studied many aluminum oxides having different properties, and then found that it is suitable for the present invention to use $\delta$, $\gamma$ and $\theta$ types of aluminum oxide.

The coating layer containing such aluminum oxide particles has remarkably excellent scratch resistance and abrasion resistance so that it seldom gives abrasion powder when contacted with a metal or plastic pin or a guide roll made of a plastic. The film containing the aluminum oxide particles only in the coating layer gives a lower abrasion speed of a slitting blade during the slitting process than in the case of the film containing the aluminum oxide particles in the whole film. The reason for the low abrasion speed of the slitting blade is supposed to be that the amount of the particles achieved by concentrating the aluminum oxide particles in the surface area of the film can be remarkably decreased to from 0.05 to 0.2 times when the particles are dispersed in the whole film.

The reason for the effects, particularly excellent abrasion resistance achieved by the use of such aluminum oxide particles is unclear. The main reason is supposed to be that such particles have good affinity for an organic binder and have suitable hardness.

Insofar as the aluminum oxide particles (B) have no adverse effect on the state of the film surface, the particles (B) may aggregate to a some extent and act as the secondary particles. The aggregated particles in the coating layer can give the scratch resistance and the abrasion resistance different from those of the homogeneous particles, because they can disperse, because of the deformation of the aggregated particles, a stress which is a stretching stress during the preparation of film or an external force during the film handling operation so that the particles do not drop off from the film.

One of the advantages resulting from the use of aggregated particles is that a low friction coefficient can be maintained after the tape runs repeatedly. The decrease of the friction coefficient is essential so as to maintain the preferable handling of the film. However, in the case that homogeneous fine particles are used, the friction coefficient may increase when the tape runs repeatedly, but in the case that the aggregated particles are used, the friction coefficient may be improved so that the film can be more practically used.

An average particle size of the aggregated particles is usually from 30 to 800 nm, preferably from 50 to 400 nm. An average particle size of the primary particles constituting the aggregated particles is preferably from 5 to 40 nm.

A part, for example, smaller than 30 % by weight of aluminum oxide may be replaced with an oxide of Si, Ti, Fe, Na, K or the like.

A particle size distribution of the aluminum oxide particles is not specifically limited and is preferably sharp. When the particles having smaller particle size are integrated, a particle size ratio of a weight fraction of 75 % to a weight fraction of 25 % is preferably not larger than 2.0, more preferably not larger than 1.5. A shape of the particles is not limited and is usually a bulk or spherical shape. Concretely, a volume shape coefficient as defined in Japanese Patent Kakoku Publication No. 14583/1978 (corresponding to USP No. 4,101,523, the disclosure of which is incorporated herein by reference.) of the particles is preferably from 0.1 to $\pi/6$, more preferably from 0.2 to $\pi/6$.

A specific surface area of the used particles is not specifically limited. For example, the truly spherical particle having the average particle size of 0.5 $\mu m$ and the density of 2 $g/cm^3$ has a specific surface area of about 6 $m^2/g$. The porous particles having the specific surface area of not larger than about 500 $m^2/g$ can be used. The surface of the particles may be modified with various surface treating agents so as to improve the affinity for an aqueous resin.

The surface treating agent is preferably a combination of a cationic surfactant with a nonionic or anionic surfactant. The particles (B) can be surface treated by adding the surfactant to an aqueous slurry of aluminum oxide and grinding the mixture.

Specific examples of the cationic surfactant are an aliphatic amine salt, a quaternary ammonium salt and a polyoxyethylenealkylamine.

Specific examples of the nonionic surfactant are an ester of a fatty acid and a polyhydric alcohol, a polyoxyethylenealkyl ether and a polyoxyethylenealkylaryl ether.

Specific examples of the anionic surfactant are an alkyl sulfonate salt, an alkylaryl sulfonate salt, an alkyl sulfate salt, an ester sulfate salt, an ether sulfate salt, an alkylarylether sulfate salt, fatty acid salt, a polycarboxylate salt and an ether carboxylate salt.

An amount of the cationic surfactant added to the slurry is usually from 0.0001 to 0.05 parts by weight per one part by weight of the aluminum oxide particles in the slurry.

An amount of the nonionic or anionic surfactant added to the slurry is usually from 0.01 to 0.5 parts by weight per one part by weight of the aluminum oxide particles in the slurry.

A means for grinding the aluminum oxide particles may be a rod mill, a ball mill, a vibration rod mill, a vibration ball mill, a pan mill, a roll mill, an impact mill, an stirring grinding mill, a liquid energy mill, a homomixer and an ultrasonic dispersion mixer. The dispersed slurry is preferably filtered through a cartridge type filter having pores of 3 $\mu$m so as to remove the coarse particles and nondispesive aggregated particles.

A content (Wb) of the aluminum oxide particles (B) in the coating layer is from 0.1 to 50 % by weight, preferably from 1 to 10 % by weight. If the content is smaller than 0.1 % by weight, the scratch resistance is not improved. If the content is larger than 50 % by weight, the strength of the coating layer is deteriorated.

In the present invention, the coating layer preferably contains particles (C) such as calcium carbonate, silicon dioxide and a thermally resistant organic particle, in addition to the aluminum oxide particles.

Preferably, an average particle size of the particles (C) is larger than that of the particles (B) and is from 0.05 to 2 $\mu$m.

The particles (C) can be prepared by any procedure and the crystalline structure of the particles (C) is not limited. The calcium carbonate particles may be the ground natural particles or synthesized particles. A crystalline structure of the calcium carbonate particles may be any of calcite type, vaterite type and aragonite type. The silicon dioxide particles may be prepared by a wet procedure or a dry procedure. Particularly, the particles having almost the same particle sizes prepared by a hydrolysis of an alkoxysilane are preferably used.

The thermally resistant organic particles may be a copolymer prepared by crosslinking a monovinyl compound having only one aliphatic unsaturated bond in a molecule with a compound having at least two aliphatic unsaturated bonds in a molecule, as described in Japanese Patent Kokoku Publication No. 5216/1984 (corresponding to USP No. 4,320,207, the disclosure of which is incorporated herein by reference). Specific example of such copolymer is a monodisperse particle prepared by an emulsion polymerization, as described in Japanese Patent Kokai Publication No. 217755/1984 (corresponding to USP 4,568,616, the disclosure of which is incorporated herein by reference.).

Other specific examples of the thermally resistant organic particles may be fine particles of a thermosetting phenol resin, a thermosetting epoxy resin, a thermosetting urea resin, a benzoguanamine resin and a fluorinated resin such as polytetrafluoroethylene.

In the present invention, the thermally resistant organic particles means the particles which do not substantially melt by the heating during the film preparation after providing the coating layer, and which can act as a mixed particle.

A content (Wc) of the particles (C) in the coating layer is usually from 5 to 50 % by weight, preferably from 7 to 45 % by weight, more preferable from 10 to 40 % by weight. A content ratio (Wc/Wb) of the particles (C) to particles (B) is usually form 0.1 to 20, preferably 0.3 to 10, more preferably from 2 to 8.

The particle size distribution and the specific surface area of the particles (C) are preferably the same as defined in the particles (B).

An aqueous polyester resin is usually used as a binder constituting the coating layer. The aqueous resin has the thermal resistance and the humidity resistance which are resistant during the preparation of the magnetic recording medium after coated on the surface of the polyester film, and which are resistant in a use environment at high temperature and high humidity after the preparation of the magnetic recording medium. When the coating layer is a primer layer so that an overcoating layer such as a magnetic layer or back coating layer is coated on the primer layer, the aqueous resin has good adhesion with the overcoating layer.

A polyvalent carboxylic acid and a polyhydric hydroxy compound may be mentioned as the components constituting the polyester resin. Specific examples of the polyvalent carboxylic acid are terephthalic acid, isophthalic acid, orthophthalic acid, phthalic acid, 4,4'-diphenyldicarboxylic acid, 2,5-naphthalene dicarboxylic acid, 2,6-naphthalene dicarboxylic acid, 1,4-cyclohexane dicarboxylic acid, 2-potassiumsulfoterephthalic acid, 5-sodiumsulfoisophthalic acid, adipic acid, azelaic acid, sebacic acid, dodecane dicarboxylic acid, glutaric acid, succinic acid, trimellitic acid, trimesic acid, trimellitic anhydride, phthalic anhydride, p-hydroxybenzoic acid, a trimellitic acid potassium salt and an ester-formable derivative thereof. Specific examples of the polyhydric hydroxy compound are ethylene glycol, 1,2-propylene glycol, 1,3-propylene glycol, 1,3-propane diol, 1,4-butane diol, 1,6-hexane diol, 2-methyl-1,5-pentane diol, neopentyl glycol, 1,4-cyclohexane dimethanol, p-xylylene glycol, a Bisphenol A/ethylene glycol adduct, diethylene glycol, triethylene glycol, polyethylene glycol, polypropylene glycol, polytetramethylene glycol, polytetramethyleneoxide glycol, dimethylolpropionic acid, glycerol, trimethylolpropane, sodium dimethylolethylsulfonate and potassium dimethylolpropionate.

Among them, at least one polyvalent carboxylic acid and at least one polyhydric hydroxy compound are selected to prepare the polyester resin according to the conventional polycondensation reactions. In addition to the above, the polyester resin may include a composite polymer having a polyester component such as a so-called acryl graft polyester and a polyester polyurethane prepared by chain-extending a polyester polyol with an isocyanate, as described in Japanese Patent Kokai Publication No. 165633/1989.

The polyester resin is mixed so that the polyester resin constitutes from 30 to 98 % by weight based on the coating layer.

The polyester resin is preferably used together with an aqueous high molecular weight epoxy resin. The aqueous high molecular weight epoxy resin may be for example, a reaction product by reacting a resin having at least two epoxy groups in a molecule such as a polycondensation reaction product between Bisphenol A and epichlorohydrin and an epoxy-novolac resin, with a polyamine such as diethylene triamine or an acid anhydride such as phthalic anhydride and an optional third component to prepare a high molecular weight epoxy resin and then introducing a hydrophilic group such as a carboxyl group and a sulfonic acid group in a molecule to prepare a high molecular weight epoxy emulsion emulsified in water.

When a generally used emulsifier is used to prepare the epoxy emulsion, the thermal resistance and the humidity resistance of the coating layer are significantly deteriorated. Accordingly, no emulsifier is preferably used to prepare the high molecular weight epoxy emulsion. A minimum membrane forming temperature MFT is preferably not higher than 90°C.

An amount of the high molecular weight epoxy resin is preferably from 0.1 to 50 % by weight, more preferably from 1 to 30 % by weight based on the coating layer.

A medium used for the aqueous resin is usually a liquid comprising at least 70 % by weight of water. The aqueous resin may be a coating agent which is forcibly dispersed by the use of the emulsifier and the like. Preferably, the aqueous resin may be self-dispersing coating agent containing a cationic group such as a quaternary ammonium salt or a nonionic component such as polyethers, more preferably a water-soluble or water-dispersable resin coating agent having an anionic group.

The resin having the anionic group may be prepared by bonding a compound having the anionic group to the resin by a copolymerization, a grafting or the like. The anionic group may be sulfonic acid, carboxylic acid and phosphoric acid; and lithium salt, sodium salt, potassium salt and ammonium salt thereof. An amount of the anionic group is preferably from 0.05 to 8 % by weight based on a solid component of the coating layer.

In the present invention, a coating liquid containing the aluminum oxide particles and the aqueous resin is coated on at least one surface of the polyester film during the preparation of the film.

In order to improve adhesion (blocking property), water resistance, solvent resistance and mechanical properties of the coating layer, the coating liquid may contain a crosslinking agent, for example, a methylol or alkylol urea, melamine, guanamine, acrylamide or polyamide compound, an epoxy compound, an aziridine compound, a blocked polyisocyanate, a silane coupling agent, a titanium coupling agent, a zirco-aluminate coupling agent, a peroxide, a thermoreactive or photoreactive vinyl compound and a photosensitive resin. If necessary, the coating liquid may contain an antifoaming agent, a coating property improving agent, a thickening agent, an antistatic agent, an antioxidant, an ultraviolet absorbing agent, a foaming agent, a dye, a pigment and the like and even the coating liquid containing the above agents sufficiently achieves the effect of the present invention.

The coating layer preferably contains a lubricant. The lubricant may be an anionic surfactant, a cationic surfactant, an ampholytic surfactant, a nonionic surfactant, a fluorinated surfactant, an organic carboxylic acid and a derivative thereof, a higher aliphatic alcohol, a paraffin and a wax. A polyolefin lubricant and a silicone lubricant are particularly preferable.

Specific examples of the polyolefin lubricant are a wax, resin or rubber comprising a homopolymer or a copolymer of 1-olefin unstaturated hydrocarbon such as ethylene, propylene, 1-butene and 4-methyl-1-pentene (for example, polyethylene, polypropylene, poly-1-butene, poly-4-methyl-1-pentene and a ethylene-propylene copolymer), an aliphatic dicarboxylic acid such as azelaic acid and sebacic acid, an oxycarboxylic acid such as oxybenzoic acid, and an ester forming derivative thereof.

The silicone lubricant may be a non-modified silicone such as dimethylpolysiloxane; or a silicone modified with a polar group such as a fatty acid, a polyether, an alcohol or an alkyl group. The silicone modified with the polar group is particularly suitable, since it has good affinity for the binder resin.

Slidability exhibited by a small amount of the lubricant present on the surface of the coating layer after the stretching prevents the scratch and the generation of abrasion powder during the running of the polyester film contacting with the running roll and the like. A synergistic action of this effect is exhibited by the presence of protrusion because of the aluminum oxide particles. Some of the lubricants may cause the bleedout. But, when the above lubricants are contained in a small content of from 0.1 to 20 % by weight based on the coating layer weight, the bleedout can be prevented.

When lubricant which is suitably present in the coating layer surface is positioned so that the hydrophobic groups are outside, the high antiblocking effect is exhibited. When a contact angle of a water drop which is seemed to be the situation of the position is between 70° and 85°, the antiblocking effect is significantly exhibited.

PREFERRED EMBODIMENT OF THE INVENTION

The present invention is illustrated by the following examples which do not limit the present invention.

In the Examples, "part" means "part by weight", unless specified.

In the Examples, the properties were measured as follows:

(1) Average particle size

A diameter (particle size) in the case that an integrated volume fraction is 50 % in an equivalent spherical distribution measured by a microscopic method is defined as an average particle size.

(2) Center line average roughness (Ra)

By the use of a surface roughness tester (SE-3F manufactured by Kosaka Kenkyusho, Ltd.), the center line average roughness was measured according to JIS B-0601-1976, with necessary modifications. The measuring conditions were the use of a contact needle having a tip radius of 2 $\mu$m, 30 mg of probe contact pressure, 0.08 mm of cutoff, and 2.5 mm of a measuring length.

A center line average roughness (Ra) was determined from the cross-sectional curve.

(3) Runnability

Two overlapped films having a size of 15 mm x 150 mm were disposed on a smooth glass plate, and a rubber plate was disposed on the two films. Under a contact pressure of the two films of 2 g/cm$^2$, one film was slidden on the other film at a speed of 20 mm/min to determine a frictional force. A friction coefficient when the film was slidden for a length of 5 mm was defined as a dynamic friction coefficient ($\mu$d). The determination was conducted under the atmosphere having a temperature of 23 $\pm$ 1°C and a humidity of 50 $\pm$ 5 %.

Good or A:    $\mu d \leq 0.5$
Fair or B:    $0.5 < \mu d \leq 0.8$
Bad or C:    $0.8 < \mu d$

(4) Abrasion resistance

The film was run for a distance of 1,000 m with contacting with a fixed hard chromium pin. White powder adhered to the pin was visually observed and evaluated as follows. A film speed was 13 m/min, a tension was about 200 g and a winding angle of the film to the pin was 135°.

Good or A:    No generation of white powder
Fair or B:    Slight generation of white powder
Bad or C:    Much generation of white powder

(5) Scratch resistance

The polyester film was contacted with a fixed hard chromium pin (diameter: 6 mm, surface roughness: 3S) at a winding angle of 135° and a tension of 200 g and then the polyester film was run for a distance of 100 m at a speed of 13 m/min. Then, aluminum was deposited on a surface of the polyester film contacting with the pin, and a degree of the scratch was visually determined to evaluate as follows:

1 or E:    Many scratches. There are often deep scratches.
2 or D:    Relatively many scratches. There are sometimes deep scratches.
3 or C:    Relatively few scratches. There are slightly deep scratches.
4 or B:    Satisfactory level, but slight scratches.
5 or A:    There are substantially no scratches

(6) Slitting property

After the polyester film of the length 10,000 m was slit by a fixed shaving blade (manufactured by Feather Ltd., double-edged) at a slit speed of 500 m/min at a blade edge angle to the film of 30°, the blade was observed by a microscope. An abrasion degree was evaluated under the following criteria:

Good or A:    Abrasion of the blade is below 2 $\mu$m.
Fair or B:    Abrasion of the blade is at least 2 $\mu$m and below 5 $\mu$m.
Bad or C:    Abrasion of the blade is at least 5 $\mu$m.

(7) Winding property

The film was wound on a roller and the an edge of the wound film was observed to evaluate under the following criteria:

A:     The edge is uniform.
B:     The edge is slightly nonuniform.
C:     The edge is remarkably nonuniform.

(8) Adhesion to calender roll

The polyester film was passed between calender rolls consisting of a polyester resin roll and a hard chromium-plated roll under the state that the coating layer contacted with the polyester resin roll at 100°C and at a line pressure of 200 kgf/cm and a speed of 20 m/sec for a distance of 200 m. Adhesion between the coating layer and the polyester resin roll was observed to evaluate under the following criteria:

A:     The film does not adheres to the polyester resin roll, and the film smoothly runs to the end.
B:     The film slightly adheres to the polyester resin roll.
C:     The film remarkably adheres to the polyester resin roll so that the film and the roll make a sound at the separation thereof and the film meanders.

(9) Electromagnetic property

Formation of magnetic layer (preparation of magnetic tape)

A magnetic paint was coated on a non-coated surface of the polyester film to prepare a magnetic layer having a dried thickness of 5 $\mu$m. Namely, magnetic fine powder (200 parts), a polyurethane resin (30 parts), nitrocellulose (10 parts), a vinyl, chloride/vinyl acetate copolymer (10 parts), lecithin (5 parts), cyclohexanone (100 part) and methyl ethyl ketone (300 parts) were mixed and kneaded for 24 hours in a ball mill, and then a polyisocyanate compound (5 parts) was added to prepare the magnetic paint. The magnetic paint was coated on the polyester film. A magnetic orientation was conducted by a conventional method before the coating was fully dried. Then, the coating was dried. The magnetic tape was treated in a supercalender and slit to make a video tape having a width of 1/2 inch. The properties of the resultant video tape were evaluated using a video deck (NV-3700 manufactured by Matsushita Electric Industrial Co., Ltd.) at a normal speed.

A VTR head output was measured by a synchroscope at a frequency of 4 MHz. A standard tape was set as 0.0 dB and a relative value was determined to evaluate under the following criteria:

Good:     above +2 dB
Fair:     +0 to +2 dB
Bad:     below +0 dB

A skew amount is determined as follows: The videotape which recorded video chroma signals was reproduced and the delay scanning operation was conducted by a color monitor CMM20-11 manufactured by Siba Soc Co. Ltd. A strain amount in a display was read by a measure and converted to a time (unit: $\mu$sec) of one horizontal scanning by the use of a ratio of a monitor display width to evaluate under the following criteria:

Good:     below 2 $\mu$sec
Fair:     2 to 5 $\mu$sec
Bad:     above 5 $\mu$sec

A video tape which recorded signals of 4.4 MHz was reproduced and then the number of dropouts was counted for about 20 minutes by a dropout counter (manufactured by Ohkura Industry, Ltd.). The number of dropouts was converted to the number of dropouts per one minute.

Comparative Example 1

Dimethyl terephthalate (100 parts), ethylene glycol (60 parts) and magnesium acetate tetrahydrate (0.09 parts) were heated with distilling off methanol to conduct a transesterification reaction. After 4 hours from the initiation of the reaction, the temperature was increased to 230°C to substantially complete the transesterification reaction. Then, ethyl acid phosphate (0.04 parts) was added and then antimony trioxide (0.04 parts) was added to conduct a polycondensation reaction. After 4.5 hours, a polyethylene terephthalate having an intrinsic viscosity of 0.660 was obtained.

The resultant polyester was dried and melt-extruded at 290°C to form an amorphous sheet. The sheet was stretched in a machine direction at a draw ratio of 3.5 at 90°C and in a transverse direction at a draw ratio of 3.7 at 110°C. Then, the sheet was thermally treated at 210°C for 3 seconds to prepare a film of 15 $\mu$m in thickness.

Comparative Example 2

A polyethylene terephthalate film was obtained in the same manner as in Comparative Example 1 except that aluminum oxide particles (0.3 parts) having an average particle size of 0.02 $\mu$m prepared by a thermal decomposition method were added at the substantial completion of the transesterification reaction.

Example 1

A biaxially stretched polyethylene terephthalate film was obtained in the same manner as in Comparative Example 1 except that, after the machine direction stretching, the following paint containing aluminum oxide particles was coated on the polyester film by a bar coating method to give a dried and stretched coating thickness of 0.05 $\mu$m.

Paint containing aluminum oxide particles

| | |
|---|---|
| Aluminum oxide particles ($\delta$ type, average particle size: 0.02 $\mu$m) | 0.3 pbw |
| Polyester resin (Pluscoat Z-461 manufactured by Gooh Kagaku Ltd.) | 9.7 pbw |
| Water | 90.0 pbw |

Example 2

A biaxially stretched polyethylene terephthalate film was obtained in the same manner as in Example 1 except that the paint containing aluminum oxide particles was changed to a paint having the following composition.

Paint containing aluminum oxide particles

| | |
|---|---|
| Aluminum oxide particles ($\delta$ type, average particle size: 0.02 $\mu$m) | 1.0 pbw |
| Polyester resin (Pluscoat Z-461 manufactured by Gooh Kagaku Ltd.) | 9.0 pbw |
| Water | 90.0 pbw |

Comparative Example 3

A biaxially stretched polyethylene terephthalate film was obtained in the same manner as in Example 1 except that the paint containing aluminum oxide particles was changed to a paint having the following composition.

Paint containing aluminum oxide particles

| | |
|---|---|
| Aluminum oxide particles ($\delta$ type, average particle size: 0.02 $\mu$m) | 6.0 pbw |
| Polyester resin (Pluscoat Z-461 manufactured by Gooh Kagaku Ltd.) | 4.0 pbw |
| Water | 90.0 pbw |

Comparative Example 4

A biaxially stretched polyethylene terephthalate film was obtained in the same manner as in Example 1 except that the paint containing aluminum oxide particles was changed to a paint having the following composition.

Paint containing silica particles

| | |
|---|---|
| Silica particles (average particle size: 0.05 µm) | 0.3 pbw |
| Polyester resin (Pluscoat Z-461 manufactured by Gooh Kagaku Ltd.) | 9.7 pbw |
| Water | 90.0 pbw |

Comparative Example 5

A biaxially stretched polyethylene terephthalate film was obtained in the same manner as in Example 1 except that the paint containing aluminum oxide particles was changed to a paint having the following composition.

Paint containing organic particles

| | |
|---|---|
| Organic particles (Polyacrylate, average particle size: 0.02 µm) | 0.3 pbw |
| Polyester resin (Pluscoat Z-461 manufactured by Gooh Kagaku Ltd.) | 9.7 pbw |
| Water | 90.0 pbw |

The results are shown in Table 1.

Table 1

| Example No. | Amount of particles in the resin (wt %) | Particles in coating layer | | | Properties of film surface | | | | Properties of magnetic tape | |
|---|---|---|---|---|---|---|---|---|---|---|
| | | Kind | Particle size (μm) | Content (wt%) | Ra (nm) | Runnability | Abrasion resistance | Scratch resistance | S/N (dB) | DO |
| Com. 1 | None | None | – | – | 5 | Bad | Bad | 1 | −1.6 | 21 |
| Com. 2 | Alumina 0.3 | None | – | – | 10 | Fair | Good | 5 | +1.0 | 2 |
| 1 | None | Alumina | 0.02 | 3 | 9 | Good | Good | 5 | +2.5 | 1 |
| 2 | None | Alumina | 0.02 | 10 | 15 | Good | Good | 5 | +1.5 | 1 |
| Com. 3 | None | Alumina | 0.02 | 60 | 43 | Good | Bad | 1 | −2.4 | 50 |
| Com. 4 | None | Silica | 0.05 | 3 | 9 | Good | Fair | 2 | +1.9 | 15 |
| Com. 5 | None | Acryl | 0.02 | 3 | 13 | Good | Fair | 3 | +1.0 | 13 |

Example 3

A biaxially stretched polyethylene terephthalate film was obtained in the same manner as in Comparative Example 1 except that, after the machine direction stretching, the following paint containing aluminum oxide particles was coated on the polyester sheet by a bar coating method to give a dried and stretched coating thickness of 0.05 $\mu$m.

Dispersion D of aluminum oxide in water

10 parts of aluminum oxide particles (thermal decomposition method, average particle size: 0.02 $\mu$m); 0.01 parts of a cationic surfactant (Discol 121 manufactured by Daiichikogyo Seiyaku Ltd.); 2.0 parts of an anionic surfactant (SN Dispersant 5020 manufactured by Sunnopco; and 87.99 parts of water.

Paint containing aluminum oxide particles

3.0 parts of Dispersion D of aluminum oxide in water; 9.7 parts of a polyester resin (Pluscoat Z-461 manufactured Gooh kagaku Ltd.); and 87.3 parts of water.

Example 4

A biaxially stretched polyethylene terephthalate film was obtained in the same manner as in Example 3 except that the paint containing aluminum oxide particles was changed to a paint having the following composition.

Dispersion E of aluminum oxide in water

10.0 parts of aluminum oxide particles (thermal decomposition method, average particle size: 0.02 $\mu$m); 0.1 parts of a cationic surfactant (Discol E-420 manufactured by Daiichikogyo Seiyaku Ltd.); 1.0 part of a anionic surfactant (Nopcosant RFA manufactured by Sunnopco); and 88.9 parts of water.

Paint containing aluminum oxide particles

3.0 parts of Dispersion E of aluminum oxide in water; 9.7 parts of a polyester resin (Pluscoat Z-461 manufactured Gooh kagaku Ltd.); and 87.3 parts of water.

Example 5

A biaxially stretched polyethylene terephthalate film was obtained in the same manner as in Example 3 except that the paint containing aluminum oxide particles was changed to a paint having the following composition.

Dispersion F of aluminum oxide in water

10.0 parts of aluminum oxide particles (thermal decomposition method, average particle size: 0.02 $\mu$m); 0.1 parts of a cationic surfactant (Discol E-420 manufactured by Daiichikogyo Seiyaku Ltd.); 3.0 part of a nonionic surfactant (Nonipol 200 manufactured by Sanyo Kasei Ltd.); and 86.9 parts of water.

Paint containing aluminum oxide particles

3.0 parts of Dispersion F of aluminum oxide in water; 9.7 parts of a polyester resin (Pluscoat Z-461 manufactured Gooh kagaku Ltd.); and 87.3 parts of water.

The results are shown in Table 2.

Table 2

| Example No. | Coating layer | | | Properties of film surface | | | | Properties of magnetic tape | |
|---|---|---|---|---|---|---|---|---|---|
| | Kind of particle | Dispersant anionic nonionic | Dispersant cationic | Ra (nm) | Runnability | Abrasion resistance | Scratch resistance | S/N ratio (dB) | DO |
| 3 | Alumina | 0.2 | 0.001 | 6 | Good | Good | 5 | +2.4 | 1 |
| 4 | Alumina | 0.1 | 0.01 | 6 | Good | Good | 5 | +2.9 | 1 |
| 5 | Alumina | 0.3 | 0.01 | 6 | Good | Good | 5 | +1.9 | 1 |

Example 6

A biaxially stretched polyethylene terephthalate film was obtained in the same manner as in Comparative Example 1 except that, after the machine direction stretching, the following paint containing aluminum oxide particles was coated on the polyester sheet by a bar coating method to give a dried and stretched coating thickness of 0.05 μm.

Paint containing aluminum oxide particles

3 parts of aluminum oxide particles (thermal decomposition method, average particle size: 0.02 μm); 1 part of a polyethylene wax (Nopcoat PEM-17 manufactured by Sunnopco); 96 parts of a polyester resin (Pluscoat Z-461 manufactured by Gooh Kagaku Ltd.); and 900 parts of water.

Example 7

A biaxially stretched polyethylene terephthalate film was obtained in the same manner as in Example 6 except that the paint containing aluminum oxide particles was changed to a paint having the following composition.

Paint containing aluminum oxide particles

3 parts of aluminum oxide particles (thermal decomposition method, average particle size: 0.02 μm); 5 parts of a polyethylene dispersion (Hitech E-4B manufactured by Toho Kagaku Ltd.); 92 parts of a polyester resin (Pluscoat Z-461 manufactured by Gooh Kagaku Ltd.); and 900 parts of water.

Example 8

A biaxially stretched polyethylene terephthalate film was obtained in the same manner as in Example 6 except that the paint containing aluminum oxide particles was changed to a paint having the following composition.

Paint containing aluminum oxide particles

10 parts of aluminum oxide particles (thermal decomposition method, average particle size: 0.02 μm); 15 parts of a polypropylene dispersion (Hitech E433N manufactured by Toho Kagaku Ltd.); 75 parts of a polyester resin (Pluscoat Z-461 manufactured by Gooh Kagaku Ltd.); and 900 parts of water.

Comparative Example 6

A biaxially stretched polyethylene terephthalate film was obtained in the same manner as in Example 6 except that the paint containing aluminum oxide particles was changed to a paint having the following composition.

Paint containing aluminum oxide particles

60 parts of aluminum oxide particles (thermal decomposition method, average particle size: 0.02 μm); 3 parts of a polyethylene wax (Nopcoat PEM-17 manufactured by Sunnopco); 37 parts of a polyester resin (Pluscoat Z-461 manufactured by Gooh Kagaku Ltd.); and 900 parts of water.

Comparative Example 7

A biaxially stretched polyethylene terephthalate film was obtained in the same manner as in Example 6 except that the paint containing aluminum oxide particles was changed to a paint having the following composition.

Paint containing particles

3 parts of organic particles (polyacrylate, average particle size: 0.02 $\mu$m); 3 parts of a polyethylene wax (Nopcoat PEM-17 manufactured by Sunnopco); 94 parts of a polyester resin (Pluscoat Z-461 manufactured by Gooh Kagaku Ltd.); and 900 parts of water.

Comparative Example 8

A biaxially stretched polyethylene terephthalate film was obtained in the same manner as in Example 6 except that the paint containing aluminum oxide particles was changed to a paint having the following composition.

Paint containing polyethylene wax

3 parts of a polyethylene wax (Nopcoat PEM-17 manufactured by Sunnopco); 97 parts of a polyester resin (Pluscoat Z-461 manufactured by Gooh Kagaku Ltd.); and 900 parts of water.

The results are shown in Table 3.

Table 3

| Example No. | Particles in coating layer | | Properties of film surface | | | | Properties of magnetic tape | |
|---|---|---|---|---|---|---|---|---|
| | Kind and wt% of particle | Lubricant, wt% | Ra (nm) | Slitting property | Abrasion resistance | Scratch resistance | S/N ratio (dB) | DO |
| 6 | Alumina, 3 | PE, 1 | 9 | Good | Very good | 5 | +2.5 | 1 |
| 7 | Alumina, 3 | PE, 5 | 8 | Good | Very good | 5 | +2.0 | 1 |
| 8 | Alumina, 3 | PP, 15 | 9 | Good | Very good | 5 | +1.7 | 1 |
| Comp. 6 | Alumina, 60 | PE, 3 | 35 | Bad | Bad | 1 | -2.4 | 50 |
| Comp. 7 | Acryl, 3 | PE, 3 | 13 | Good | Fair | 2 | +1.9 | 15 |
| Comp. 8 | - | PE, 3 | 5 | Good | Fair | 3 | +0.5 | 12 |

Reference Example 9

Dimethyl terephthalate (100 parts), ethylene glycol (60 parts) and magnesium acetate tetrahydrate (0.09 parts) were heated with distilling off methanol to conduct a transesterification reaction. After 4 hours from the initiation of the reaction, the temperature was increased to 230°C to substantially complete the transesterification reaction. Then, ethyl acid phosphate (0.04 parts) was added and then antimony trioxide (0.04 parts) was added to conduct a polycondensation reaction. After 4.5 hours, a polyethylene terephthalate having an intrinsic viscosity of 0.660 was obtained.

The resultant polyester was dried and melt-extruded at 290°C to form an amorphous sheet. The sheet was stretched in a machine direction at a draw ratio of 3.5 at 90°C and the following paint containing $\alpha$-aluminum oxide particles was coated on the sheet by a bar coating method to prepare a coating layer having a dried and stretched thickness of 0.3 $\mu$m. Then, the sheet was stretched in a transverse direction at a draw ratio of 3.7 at 110°C and thermally treated at 210°C for 3 seconds to prepare a film of 15 $\mu$m in thickness.

Paint containing α-aluminum oxide particles

3 parts of α-aluminum oxide particles (average particle size: 0.3 μm); 97 parts of a polyester resin (Pluscoat Z-461 prepared by Gooh Kagaku Ltd.); and 900 parts of water.

Comparative Example 9

A biaxially stretched polyethylene terephthalate film was obtained in the same manner as in Reference Example 9 except that the paint containing aluminum oxide particles was changed to a paint having the following composition.

Paint containing aluminum oxide particles

10 parts of α-aluminum oxide particles (average particle size: 1.2 μm); 90 parts of a polyester resin (Pluscoat Z-461 manufactured by Gooh Kagaku Ltd.); and 900 parts of water.

Comparative Example 10

A biaxially stretched polyethylene terephthalate film was obtained in the same manner as in Reference Example 9 except that the paint containing aluminum oxide particles was changed to a paint having the following composition.

Paint containing aluminum oxide particles

60 parts of α-aluminum oxide particles (average particle size: 0.3 μm); 40 parts of a polyester resin (Pluscoat Z-461 manufactured by Gooh Kagaku Ltd.); and 900 parts of water.

The results are shown in Tables 4 and 5.

Table 4

| Example No. | Particles in coating layer | | | Properties of film surface | | | | |
|---|---|---|---|---|---|---|---|---|
| | Kind | Particle size (μm) | Content (wt%) | Ra (nm) | Runnability | Abrasion resist-tance | Scratch resist-tance | Slitting property |
| 9(Reference) | α-Alumina | 0.3 | 3 | 9 | 0.65 | B | A | B |
| Comp. 9 | α-Alumina | 1.2 | 10 | 12 | 0.40 | C | B | C |
| Comp. 10 | α-Alumina | 0.3 | 60 | 43 | 0.51 | B | C | C |

Table 5

| Example No. | Electromagnetic properties | |
|---|---|---|
| | S/N (dB) | DO (dropouts/min) |
| 9(Reference) | +2.5 | 1 |
| Comp. 9 | +0.8 | 17 |
| Comp. 10 | -2.4 | 50 |

Example 12

Dimethyl terephthalate (100 parts), ethylene glycol (60 parts) and magnesium acetate tetrahydrate (0.09 parts) were heated with distilling off methanol to conduct a transesterification reaction. After 4 hours from the initiation of the reaction, the temperature was increased to 230°C to substantially complete the transesterification reaction. Then, ethyl acid phosphate (0.04 parts) was added and then antimony trioxide (0.04 parts) was added to conduct a polycondensation reaction. After 4.5 hours, a polyethylene terephthalate having an intrinsic viscosity of 0.660 was obtained.

The resultant polyester was dried and melt-extruded at 290°C to form an amorphous sheet. The sheet was stretched in a machine direction at a draw ratio of 3.5 at 90°C and the following paint containing aluminum oxide particles was coated on the sheet by a bar coating method to prepare a coating layer having a dried and stretched thickness of 0.1 $\mu$m. Then, the sheet was stretched in a transverse direction at a draw ratio of 3.7 at 110°C and thermally treated at 210°C for 3 seconds to prepare a film of 15 $\mu$m in thickness.

Paint containing aluminum oxide particles

3 parts by weight of aluminum oxide (primary particle size: 20 nm, average particle size of aggregated particles: 80 nm); 97 parts by weight of a polyester resin (Pluscoat Z-461 manufactured by Gooh Kagaku Ltd.); and 900 parts by weight of water.

The aluminum oxide particle aggregate and a dispersant were dispersed in water having the amount of nine times the amount of the aggregate and the aggregate was gradually dispersed by a sand grinder to prepare a slurry of aggregate having a desired average particle size which was the paint.

Example 13

A biaxially stretched polyethylene terephthalate film was obtained in the same manner as in Example 12 except that the paint containing aluminum oxide particles was changed to a paint having the following composition.

Paint containing aluminum oxide particles

10 parts by weight of aluminum oxide (primary particle size: 20 nm, average particle size of aggregated particles: 80 nm); 90 parts by weight of a polyester resin (Pluscoat Z-461 manufactured by Gooh Kagaku Ltd.); and 900 parts by weight of water.

Example 14

A biaxially stretched polyethylene terephthalate film was obtained in the same manner as in Example 12 except that the paint containing aluminum oxide particles was changed to a paint having the following composition.

Paint containing aluminum oxide particles

10 parts by weight of aluminum oxide (primary particle size: 20 nm, average particle size of aggregated particles: 400 nm); 90 parts by weight of a polyester resin (Pluscoat Z-461 manufactured by Gooh Kagaku Ltd.); and 900 parts by weight of water.

Comparative Example 11

A biaxially stretched polyethylene terephthalate film was obtained in the same manner as in Example 12 except that the paint containing aluminum oxide particles was changed to a paint having the following composition.

Paint containing silica particles

10 parts by weight of silica particles (primary particle size: 30 nm, average particle size of aggregated particles: 90 nm); 90 parts by weight of a polyester resin (Pluscoat Z-461 manufactured by Gooh Kagaku Ltd.); and 900 parts by weight of water.

The results are shown in Tables 6 and 7.

16

Table 6

| Example No. | Particles in coating layer | | | | Properties of film surface | | | |
|---|---|---|---|---|---|---|---|---|
| | Kind | Particle size (nm) | | Content (wt%) | Ra (nm) | Runnability | Abrasion resisttance | Scratch resisttance |
| | | Primary | Aggregate | | | | | |
| 12 | Alumina | 20 | 80 | 3 | 9 | A | A | A |
| 13 | Alumina | 20 | 80 | 10 | 10 | A | A | A |
| 14 | Alumina | 20 | 400 | 10 | 15 | A | A | B |
| Comp. 11 | Silica | 30 | 90 | 10 | 13 | A | B | C |

Table 7

| Example No. | Magnetic tape properties | |
|---|---|---|
| | Head output S/N (dB) | DO |
| 12 | +2.5 | 1 |
| 13 | +2.1 | 1 |
| 14 | +1.5 | 2 |
| Comp. 11 | +1.0 | 8 |

## Example 15

Dimethyl terephthalate (100 parts), ethylene glycol (60 parts) and magnesium acetate tetrahydrate (0.09 parts) were heated with distilling off methanol to conduct a transesterification reaction. After 4 hours from the initiation of the reaction, the temperature was increased to 230°C to substantially complete the transesterification reaction. Then, ethyl acid phosphate (0.04 parts) was added and then antimony trioxide (0.04 parts) was added to conduct a polycondensation reaction. After 4.5 hours, a polyethylene terephthalate having an intrinsic viscosity of 0.660 was obtained.

The resultant polyester was dried and melt-extruded at 290°C to form an amorphous sheet. The sheet was stretched in a machine direction at a draw ratio of 3.5 at 90°C and a paint prepared by adding, to the following paint containing δ-aluminum oxide particles, a nonionic dispersant in an amount of 0.1 times the amount of the following paint and dispersing the mixture by a sand grinder was coated on the sheet by a bar coating method to prepare a coating layer having a dried and stretched thickness of 0.1 μm. Then, the sheet was stretched in a transverse direction at a draw ratio of 3.7 at 110°C and thermally treated at 210°C for 3 seconds to prepare a film of 15 μm in thickness.

### Paint containing aluminum oxide particles

3 parts by weight of δ-aluminum oxide particles (average particle size: 0.03 μm); 97 parts by weight of a polyester resin (Pluscoat Z-461 manufactured by Gooh Kagaku Ltd.); and 900 parts by weight of water.

### Example 16

A biaxially stretched polyethylene terephthalate film was obtained in the same manner as in Example 15 except that the paint containing aluminum oxide particles was changed to a paint having the following composition.

Paint containing aluminum oxide particles

10 parts by weight of δ-aluminum oxide particles (average particle size: 0.03 μm); 90 parts by weight of a polyester resin (Pluscoat Z-461 manufactured by Gooh Kagaku Ltd.); and 900 parts by weight of water.

Example 17

A biaxially stretched polyethylene terephthalate film was obtained in the same manner as in Example 15 except that the paint containing aluminum oxide particles was changed to a paint having the following composition.

Paint containing aluminum oxide particles

10 parts by weight of δ-aluminum oxide particles (average particle size: 0.1 μm); 90 parts by weight of a polyester resin (Pluscoat Z-461 manufactured by Gooh Kagaku Ltd.); and 900 parts by weight of water.

Example 18

A biaxially stretched polyethylene terephthalate film was obtained in the same manner as in Example 15 except that the paint containing aluminum oxide particles was changed to a paint having the following composition.

Paint containing aluminum oxide particles

10 parts by weight of γ-aluminum oxide particles (average particle size: 0.05 μm); 90 parts by weight of a polyester resin (Pluscoat Z-461 manufactured by Gooh Kagaku Ltd.); and 900 parts by weight of water.

Example 19

A biaxially stretched polyethylene terephthalate film was obtained in the same manner as in Example 15 except that the paint containing aluminum oxide particles was changed to a paint having the following composition.

Paint containing aluminum oxide particles

10 parts by weight of θ-aluminum oxide particles (average particle size: 0.08 μm); 90 parts by weight of a polyester resin (Pluscoat Z-461 manufactured by Gooh Kagaku Ltd.); and 900 parts by weight of water.

Comparative Example 12

A biaxially stretched polyethylene terephthalate film was obtained in the same manner as in Example 15 except that the paint containing aluminum oxide particles was changed to a paint having the following composition.

Paint containing aluminum oxide particles

60 parts by weight of δ-aluminum oxide particles (thermal decomposition method, average particle size: 0.03 μm); 40 parts by weight of a polyester resin (Pluscoat Z-461 manufactured by Gooh Kagaku Ltd.); and 900 parts by weight of water.

The results are shown in Tables 8 and 9.

Table 8

| Example No. | Particles in coating layer | | | Properties of film surface | | | | |
|---|---|---|---|---|---|---|---|---|
| | Kind | Particle size (μm) | Content (wt%) | Ra (nm) | Runnability | Abrasion resist-tance | Scratch resist-tance | Slitting property |
| 15 | δ-Alumina | 0.03 | 3 | 9 | 0.65 | A | A | A |
| 16 | δ-Alumina | 0.03 | 10 | 10 | 0.54 | A | A | A |

Table 8 (continued)

| Example No. | Particles in coating layer | | | Properties of film surface | | | | |
|---|---|---|---|---|---|---|---|---|
| | Kind | Particle size (μm) | Content (wt%) | Ra (nm) | Runnability | Abrasion resist-tance | Scratch resist-tance | Slitting property |
| 17 | δ-Alumina | 0.1 | 10 | 12 | 0.34 | A | A | A |
| 18 | γ-Alumina | 0.05 | 10 | 11 | 0.46 | A | A | A |
| 19 | θ-Alumina | 0.08 | 10 | 13 | 0.36 | A | A | A |
| Comp. 12 | δ-Alumina | 0.03 | 60 | 43 | 0.51 | C | E | C |

Table 9

| Example No. | Properties of magnetic tape | |
|---|---|---|
| | Head output S/N (dB) | DO (dropouts/min) |
| 15 | +2.5 | 1 |
| 16 | +2.1 | 1 |
| 17 | +1.7 | 2 |
| 18 | +1.9 | 1 |
| 19 | +1.8 | 2 |
| Comp. 12 | -2.4 | 50 |

Example 20

Dimethyl terephthalate (100 parts), ethylene glycol (60 parts) and magnesium acetate tetrahydrate (0.09 parts) were heated with distilling off methanol to conduct a transesterification reaction. After 4 hours from the initiation of the reaction, the temperature was increased to 230°C to substantially complete the transesterification reaction. Then, $SiO_2$ particles (0.1 parts) having an average particle size of 0.7 μm were added, ethyl acid phosphate (0.04 parts) was added and then antimony trioxide (0.04 parts) was added to conduct a polycondensation reaction. After 4.5 hours, a polyethylene terephthalate having an intrinsic viscosity of 0.660 was obtained.

The resultant polyester was dried and melt-extruded at 290°C to form an amorphous sheet. The sheet was stretched in a machine direction at a draw ratio of 3.5 at 90°C and the following paint containing aluminum oxide particles was coated on the sheet by a bar coating method to prepare a coating layer having a dried and stretched thickness of 0.1 μm. Then, the sheet was stretched in a transverse direction at a draw ratio of 3.7 at 110°C and thermally treated at 210°C for 3 seconds to prepare a film of 15 μm in thickness.

Paint containing aluminum oxide particles

3 parts of aluminum oxide (average particle size: 0.1 μm); 97 parts of a polyester resin (Pluscoat Z-461 manufactured by Gooh Kagaku Ltd.); and 900 parts of water.

Example 21

A biaxially stretched polyethylene terephthalate film was obtained in the same manner as in Example 20 except that calcium carbonate particles having an average particle size of 0.8 μm (0.04 parts) were added after the completion of the transesterification reaction instead of $SiO_2$ particles and that the paint containing aluminum oxide particles was changed to a paint having the following composition.

Paint containing aluminum oxide particles

10 parts of aluminum oxide (average particle size: 0.04 μm); 90 parts of a polyester resin (Pluscoat Z-461 manufactured by Gooh Kagaku Ltd.); and 900 parts of water.

Example 22

A biaxially stretched polyethylene terephthalate film was obtained in the same manner as in Example 21 except that calcium carbonate particles having an average particle size of 1.7 μm (0.01 parts) were added after the completion of the transesterification reaction instead of the calcium carbonate particles having the average particle size of 0.8 μm, that the layer made of the paint containing aluminum oxide particles had a thickness of 0.6 μm.

Comparative Example 13

A biaxially stretched polyethylene terephthalate film was obtained in the same manner as in Example 21 except that the paint containing aluminum oxide particles was not coated.

Comparative Example 14

A biaxially stretched polyethylene terephthalate film was obtained in the same manner as in Example 20 except that aluminum oxide particles having an average particle size of 0.1 μm (0.3 parts) were added together with the $SiO_2$ particles having an average particle size of 0.7 μm after the completion of the transesterification reaction, and that the paint containing aluminum oxide particles was not coated.

The results are shown in Tables 10 and 11.

Table 10

| Exam-ple No. | Particles in film | | | Particles in coating layer | | Thick-ness of coating layer T ($\mu$m) | Properties of film surface | | | |
|---|---|---|---|---|---|---|---|---|---|---|
| | Kind | Particle size Da ($\mu$m) | Con-tent (pbw) | Particle size Db ($\mu$m) | Con-tent (wt%) | | Runn-ability | Abrasion resist-tance | Scratch resist-tance | Winding property |
| 20 | $SiO_2$ | 0.7 | 0.1 | 0.1 | 3 | 0.1 | 0.55 | A | A | A |
| 21 | $CaCO_3$ | 0.8 | 0.04 | 0.04 | 10 | 0.1 | 0.41 | A | A | A |
| 22 | $CaCO_3$ | 1.7 | 0.01 | 0.04 | 10 | 0.6 | 0.65 | A | A | A |
| Com. 13 | $CaCO_3$ | 0.8 | 0.04 | - | - | - | 0.87 | C | D | A |
| Com. 14 | $SiO_2$ Alumina | 0.7 0.1 | 0.1 0.3 | - | - | - | 0.47 | B | B | A |

EP 0 579 121 B1

Table 11

| Example No. | Electromagnetic properties | |
|---|---|---|
| | Head output S/N (dB) | DO (dropouts) |
| 20 | +2.3 | 1 |
| 21 | +2.6 | 2 |
| 22 | +1.5 | 1 |
| Com. 13 | +2.2 | 13 |
| Com. 14 | +2.5 | 10 |

Example 23

A biaxially stretched polyethylene terephthalate film was obtained in the same manner as in Example 1 except that the paint containing aluminum oxide particles was changed to a paint having the following composition.

Paint containing aluminum oxide particles

3 parts of aluminum oxide particles (thermal decomposition method, average particle size: 0.02 $\mu$m); 3 parts of a high molecular weight epoxy resin (Dicfine EN 0270 manufactured by Dainippon Ink Ltd.); 94 parts of a polyester resin (Pluscoat Z-461 manufactured by Gooh Kagaku Ltd.); and 900 parts of water.

Example 24

A biaxially stretched polyethylene terephthalate film was obtained in the same manner as in Example 1 except that the paint containing aluminum oxide particles was changed to a paint having the following composition.

Paint containing aluminum oxide particles

10 parts of aluminum oxide particles (thermal decomposition method, average particle size: 0.02 $\mu$m); 10 parts of a high molecular weight epoxy resin (Dicfine EN 0270 manufactured by Dainippon Ink Ltd.); 80 parts of a polyester resin (Pluscoat Z-461 manufactured by Gooh Kagaku Ltd.); and 900 parts of water.

Example 25

A biaxially stretched polyethylene terephthalate film was obtained in the same manner as in Example 1 except that the paint containing aluminum oxide particles was changed to a paint having the following composition.

Paint containing aluminum oxide particles

30 parts of aluminum oxide particles (thermal decomposition method, average particle size: 0.02 $\mu$m); 30 parts of a high molecular weight epoxy resin (Dicfine EN 0270 manufactured by Dainippon Ink Ltd.); 40 parts of a polyester resin (Pluscoat Z-461 manufactured by Gooh Kagaku Ltd.); and 900 parts of water.

Comparative Example 15

A biaxially stretched polyethylene terephthalate film was obtained in the same manner as in Example 1 except that the paint containing aluminum oxide particles was changed to a paint having the following composition.

Paint containing aluminum oxide particles

60 parts of aluminum oxide particles (thermal decomposition method, average particle size: 0.02 $\mu$m); 10 parts of a high molecular weight epoxy resin (Dicfine EN 0270 manufactured by Dainippon Ink Ltd.); 30 parts of a polyester resin (Pluscoat Z-461 manufactured by Gooh Kagaku Ltd.); and 900 parts of water.

The results are shown in Table 12.

Table 12

| Example No. | Composition of coating layer | | Properties of film surface | | | Properties of magnetic tape | |
|---|---|---|---|---|---|---|---|
| | Alumina (wt%) | Epoxy (wt%) | Ra (nm) | Calender adhesion | Scratch resisttance | S/N (dB) | DO |
| 23 | 3 | 3 | 5 | A | A | +2.5 | 1 |
| 24 | 10 | 10 | 6 | A | A | +2.0 | 1 |
| 25 | 30 | 30 | 15 | A | A | +1.7 | 3 |
| Com. 15 | 60 | 10 | 63 | A | E | -2.4 | 50 |

<u>Example 26</u>

Dimethyl terephthalate (100 parts), ethylene glycol (60 parts) and magnesium acetate tetrahydrate (0.09 parts) were heated with distilling off methanol to conduct a transesterification reaction. After 4 hours from the initiation of the reaction, the temperature was increased to 230°C to substantially complete the transesterification reaction. Then, ethyl acid phosphate (0.04 parts) was added and then antimony trioxide (0.04 parts) was added to conduct a polycondensation reaction. After 4.5 hours, a polyethylene terephthalate having an intrinsic viscosity of 0.660 was obtained.

The resultant polyester was dried and melt-extruded at 290°C to form an amorphous sheet. The sheet was stretched in a machine direction at a draw ratio of 3.5 at 90°C. The following paint containing particles was coated on one surface of the sheet by a bar coating method to prepare a coating layer having a dried and stretched thickness of 0.10 $\mu$m.

<u>The paint</u>

| | (part by weight) |
|---|---|
| Aluminum oxide particles ($\delta$ type, average particle size: 0.02 $\mu$m) | 0.3 |
| Synthesized calcium carbonate particles (calcite type, average particle size: 0.1 $\mu$m) | 2.4 |
| Polyester resin | 7.3 |
| Water | 90.0 |

Then, the sheet was stretched in a transverse direction at a draw ratio of 3.7 at 110°C and thermally treated at 210°C for 3 seconds to prepare a film of 15 $\mu$m in thickness.

<u>Example 27 and 28 and Comparative Example 16</u>

The film having the coating layer was prepared in the same manner as in Example 26 except that the paint was changed as shown in Table 13.

The results of the resultant films are shown in Table 13.

23

Table 13

| Example No. | Particles in coating layer | | | | | | Properties of film surface | | | | | | Properties of magnetic tape | |
|---|---|---|---|---|---|---|---|---|---|---|---|---|---|---|
| | Particles (A) | | Particles (B) | | | Wb/Wa | Ra (μm) | Runn-ability | Abra-sion resis-tance | Scra-tch resis-tance | Wind-ing prop-erty | Cale-nder adhe-sion | S/N (dB) | Drop-out |
| | Aver-age part-icle size (μm) | Con-tent Wa (wt%) | Kind | Aver-age part-icle size (μm) | Con-tent Wb (wt%) | | | | | | | | | |
| 26 | 0.02 | 3 | Calcium carbonate | 0.1 | 24 | 8 | 0.018 | 0.31 | A | A | A | A | +1.2 | 1 |
| 27 | 0.03 | 10 | Spherical silica | 0.2 | 20 | 2 | 0.024 | 0.29 | A | A | A | A | +1.1 | 1 |
| 28 | 0.03 | 10 | Thermally resistant organic particles* | 0.1 | 20 | 2 | 0.019 | 0.34 | A | A | A | A | +1.3 | 1 |
| Com. 16 | 0.02 | 0.05 | Calcium carbonate | 0.1 | 30 | 600 | 0.024 | 0.28 | B | D | A | A | -1.0 | 10 |

Note) *: Styrene/divinyl benzene/methyl methacrylate terpolymer

EP 0 579 121 B1

**Claims**

1. A polyester film comprising a polyester substrate film and a coating layer containing a polyester resin in an amount of 30 to 98 % by weight on at least one surface of the polyester substrate film prepared during a film formation process of the polyester substrate film wherein at least 80% by weight of the repeating units of the polyester of the substrate film are ethylene terephthalate units or ethylene-2,6-naphthalate units, the coating layer having a thickness (T) of 0.01 to 1 $\mu$m and containing from 0.1 to 50% by weight of aluminum oxide particles (B) having an average particle size (Db) of not larger than 1 $\mu$m selected from the group consisting of $\gamma$-, $\delta$- and $\theta$-aluminum oxides.

2. The polyester film according to claim 1, wherein the coating layer contains 0.1 to 20 % by weight of a lubricant.

3. The polyester film according to claim 1, wherein the aluminum oxide particle in the coating layer is an aggregate having an average particle size of 30 to 800 nm formed from particles having a primary particle size of 5 to 40 nm.

4. The polyester film according to claim 1, wherein the polyester substrate film contains 0.005 to 0.5% by weight of particles (A) having an average particle size (Da) of 0.2 to 2 $\mu$m.

5. The polyester film according to claim 1, wherein the average particle size (Db) of the aluminum oxide particles (B) in the coating layer and the thickness (T) of the coating layer satisfy the following inequality:

$$0.9 \, Db \leq T.$$

6. The polyester film according to claim 1, wherein an average particle size (Da) of particles (A) in the substrate film and the thickness (T) of the coating layer satisfy the following inequality:

$$T \leq 0.5 \, Da.$$

7. The polyester film according to claim 1, wherein an average particle size (Da) of particles (A) in the substrate film, the average particle size (Db) of the aluminum oxide particles (B) in the coating layer and the thickness (T) of the coating layer satisfy the following inequality:

$$0.9 \, Db \leq T \leq 0.5 \, Da.$$

8. The polyester film according to claim 1, wherein the coating layer contains particles (C) having an average particle size which is larger than the average particle size of the aluminum oxide particles and is from 0.05 to 2 $\mu$m, and the particles (C) being selected from the group consisting of calcium carbonate, silicon dioxide and thermally resistant organic particles and satisfying the following inequality:

$$0.1 \leq Wb \leq 50 \tag{1}$$

$$5 \leq Wc \leq 50 \tag{2}$$

$$0.1 \leq Wc/Wb \leq 20 \tag{3}$$

wherein Wb is the content (% by weight) of the aluminum oxide particles (B) in the coating layer, and Wc is a content (% by weight) of the particles(C) in the coating layer.

9. The polyester film according to claim 1, wherein the coating layer contains a high molecular weight epoxy resin in an amount of 0.1 to 50 % by weight.

**Patentansprüche**

1. Polyesterfolie, umfassend eine Polyestersubstratfolie und eine ein Polyesterharz in einer Menge von 30 bis 98 Gew.-% enthaltende Überzugsschicht auf mindestens einer Oberfläche der Polyestersubstratfolie, hergestellt während eines Folienbildungsverfahrens der Polyestersubstratfolie, wobei mindestens 80 Gew.-% der wiederkehrenden Einheiten des Polyesters der Substratfolie Ethylenterephthalateinheiten oder Ethylen-2,6-naphthalateinheiten sind, und wobei die Überzugsschicht eine Dicke (T) von 0,01 bis 1 $\mu$m aufweist und 0,1 bis 50 Gew.-% Aluminiumoxidteilchen (B) mit einer durchschnittlichen Teilchengröße (Db) von nicht mehr als 1 $\mu$m enthält, gewählt aus der

$\gamma$-,$\delta$- und $\theta$-Aluminiumoxide umfassenden Gruppe.

2. Polyesterfolie nach Anspruch 1, wobei die Überzugsschicht 0,1 bis 20 Gew.-% eines Gleitmittels enthält.

3. Polyesterfolie nach Anspruch 1, wobei das Aluminiumoxidteilchen in der Überzugsschicht ein Aggregat mit einer durchschnittlichen Teilchengröße von 30 bis 800 nm ist, gebildet aus Teilchen mit einer primären Teilchengröße von 5 bis 40 mn.

4. Polyesterfolie nach Anspruch 1, wobei die Polyestersubstratfolie 0,005 bis 0,5 Gew.-% Teilchen (A) mit einer durchschnittlichen Teilchengröße (Da) von 0,2 bis 2 $\mu$m enthält.

5. Polyesterfolie nach Anspruch 1, wobei die durchschnittliche Teilchengröße (Db) der Aluminiumoxidteilchen (B) in der Überzugsschicht und die Dicke (T) der Überzugsschicht der folgenden Ungleichung genügen:

$$0,9 \, Db \leq T.$$

6. Polyesterfolie nach Anspruch 1, wobei die durchschnittliche Teilchengröße (Da) der Teilchen (A) in der Substratfolie und die Dicke (T) der Überzugsschicht der folgenden Ungleichung genügen:

$$T \leq 0,5 \, Da.$$

7. Polyesterfolie nach Anspruch 1, wobei eine durchschnittliche Teilchengröße (Da) von Teilchen (A) in der Substratfolie, die durchschnittliche Teilchengröße (Db) der Aluminiumoxidteilchen (B) in der Überzugsschicht und die Dicke (T) der Überzugsschicht der folgenden Ungleichung genügen:

$$0,9 \, Db \leq T \leq 0,5 \, Da.$$

8. Polyesterfolie nach Anspruch 1, wobei die Überzugsschicht Teilchen (C) mit einer durchschnittlichen Teilchengröße, welche größer ist als die durchschnittliche Teilchengröße der Aluminiumoxidteilchen und 0,05 bis 2 $\mu$m beträgt, enthält, wobei die Teilchen (C) aus der Calciumcarbonat, Siliciumdioxid und wärmebeständige, organische Teilchen umfassenden Gruppe gewählt sind und der folgenden Ungleichung genügen:

$$0,1 \leq Wb \leq 50 \tag{1}$$

$$5 \leq Wc \leq 50 \tag{2}$$

$$0,1 \leq Wc/Wb \leq 20 \tag{3}$$

worin Wb der Gehalt (Gew.-%) der Aluminiumoxidteilchen (B) in der Überzugsschicht ist und Wc der Gehalt (Gew.-%) der Teilchen (C) in der Überzugsschicht ist.

9. Polyesterfolie nach Anspruch 1, wobei die Überzugsschicht ein hochmolekulargewichtiges Epoxyharz in einer Menge von 0,1 bis 50 Gew.-% enthält.

**Revendications**

1. Film de polyester comprenant un film de substrat en polyester et une couche de revêtement contenant une résine de polyester à raison de 30 à 98% en poids sur au moins une surface du film de substrat en polyester, préparé au cours d'un procédé de formation du film de substrat en polyester, dans lequel au moins 80% en poids des motifs récurrents du polyester du film de substrat sont des motifs éthylène-téréphtalate ou des motifs éthylène-2,6-naphtalate, la couche de revêtement ayant une épaisseur (T) de 0,01 à 1 $\mu$m et contenant de 0,1 à 50% en poids de particules d'un oxyde d'aluminium (B) ayant une granulométrie moyenne (Db) non supérieure à 1 $\mu$m choisi dans le groupe constitué par les oxydes d'aluminium $\gamma$, $\delta$ et $\theta$.

2. Film de polyester selon la revendication 1, dans lequel la couche de revêtement contient 0,1 à 20% en poids d'un lubrifiant.

3. Film de polyester selon la revendication 1, dans lequel la particule d'oxyde d'aluminium dans la couche de revêtement est un agrégat ayant une granulométrie moyenne de 30 à 800 nm formé à partir de particules ayant une granulométrie primaire de 5 à 40 nm.

4. Film de polyester selon la revendication 1, dans lequel le film de substrat en polyester contient 0,005 à 0,5% en poids de particules (A) ayant une granulométrie moyenne (Da) de 0,2 à 2 $\mu$m.

5. Film de polyester selon la revendication 1, dans lequel la granulométrie moyenne (Db) des particules d'oxyde d'aluminium (B) dans la couche de revêtement et l'épaisseur (T) de la couche de revêtement satisfont à l'inégalité suivante:

$$0,9 \, Db \leq T.$$

6. Film de polyester selon la revendication 1, dans lequel la granulométrie moyenne (Da) des particules (A) dans le film de substrat et l'épaisseur (T) de la couche de revêtement satisfont à l'inégalité suivante:

$$T \leq 0,5 \, Da.$$

7. Film de polyester selon la revendication 1, dans lequel la granulométrie moyenne (Da) des particules (A) dans le film de substrat, la granulométrie moyenne (Db) des particules d'oxyde d'aluminium (B) dans la couche de revêtement et l'épaisseur (T) de la couche de revêtement satisfont à l'inégalité suivante:

$$0,9 \, Db \leq T \leq 0,5 \, Da.$$

8. Film de polyester selon la revendication 1, dans lequel la couche de revêtement contient des particules (C) ayant une granulométrie moyenne qui est supérieure à la granulométrie moyenne des particules d'oxyde d'aluminium et qui est de 0,05 a 2 $\mu$m, et les particules (C) étant choisies dans le groupe constitué par le carbonate de calcium, le dioxyde de silicium et les particules organiques ayant une résistance thermique, et satisfaisant à l'inéquation suivante:

$$0,1 \leq Wb \leq 50 \qquad\qquad (1)$$

$$5 \leq Wc \leq 50 \qquad\qquad (2)$$

$$0,1 \leq Wc/Wb \leq 20 \qquad\qquad (3)$$

dans laquelle Wb est la proportion (% en poids) des particules d'oxyde d'aluminium (B) dans la couche de revêtement et Wc est la proportion (% en poids) des particules d'oxyde (C) dans la couche de revêtement.

9. Film de polyester selon la revendication 1, dans lequel la couche de revêtement contient une résine époxy de masse moléculaire élevée à raison de 0,1 à 50% en poids.